# EUROPEAN PATENT APPLICATION

(11) **EP 4 539 432 A1**
(43) Date of publication of application: **16.04.2025**
(21) Application number: 24166962.1
(22) Date of filing: 27.03.2024
(51) Int. Cl.: H04L 67/12, H04L 12/40, H04L 69/28, H04L 43/10, H04L 69/16

(54) **METHOD AND SYSTEM FOR IMPLEMENTING VEHICLE BUS VIRTUAL CHANNEL**

(30) Priority: 15.10.2023 US 202318380187; 26.10.2023 CN 202311402885
(71) Applicant: Shanghai Tosun Technology Ltd., Shanghai 201804 (CN)
(72) Inventor: LIU, Chu, Shanghai (CN); XIE, Yueyin, Shanghai (CN); MO, Mang, Shanghai (CN)
(74) Representative: Patentanwälte Gierlich & Pischitzis Partnerschaft mbB

(57) **Abstract**

Provided is a system for implementing a vehicle bus virtual channel, comprising: at least one computer device, configured to execute client processes and a server process; wherein, the client processes are configured to send a registration request data packet to the server process, send a heartbeat packet to the server process at a specific time interval, and send a vehicle bus message to the server process; the server process is configured to: receive the registration request data packet, the heartbeat packet, and the vehicle bus message from a client process, set a timestamp of the vehicle bus message and send the vehicle bus message back to the client process while modifying a direction attribute of the vehicle bus message to "sent"; at the same time, send the vehicle bus message to other client processes and modify the direction attribute of the vehicle bus message to "received".

## Description

### CROSS-REFERENCE TO THE RELATED APPLICATION

This application is based upon and claims priority to the Chinese Patent Application No. 2023114028853 filed on October 26, 2023, and the United States Patent Application No. 18/380,187 filed on October 15, 2023, the entire contents of which are incorporated herein by reference.

### TECHNIC FIELD

The present disclosure relates to the field of vehicular software development technologies, and in particular to a method and system for implementing a vehicle bus virtual channel.

### BACKGROUND

In order to simulate the communication processes of various vehicle buses on a computer, and provide virtual hardware support for bus tools, various bus tool processes can be connected mutually via virtual hardware to perform real-time communication. In the relevant vehicular software development technologies, data transmission of the virtual buses is usually controlled at the bottom layer of the system by writing a driver program.

### SUMMARY

The present disclosure provides a method and system for implementing a vehicle bus virtual channel, including:
creating a server process as a provider of the virtual channel and monitoring a fixed port of a local computer after being enabled; creating at least one client process, taking each client process as a user of the virtual channel, and monitoring a random port of the local computer after being enabled;
wherein, the client process sends a registration request data packet to the server process; upon successful reception, the server process, returns a reception success signal back to the client process; after receiving the reception success signal, the client process sends a heartbeat packet to the server process at a specific time interval and waits for a response of the server process for the heartbeat packet;
wherein the client process sends a vehicle bus message to the server process; if the vehicle bus message is sent successfully, the server process sets a timestamp of the vehicle bus message and then sends the vehicle bus message back to the client process while modifying a direction attribute of the vehicle bus message to "sent"; at the same time, sends the vehicle bus message to other client processes and modifying the direction attribute of the vehicle bus message to "received".

The summary of the present disclosure aims to provide brief descriptions for the subjects of the specification. Thus, it should be understood that the above features are only illustrative and shall not be interpreted as narrowing the scope or essence of the subject of the specification in any way.

Other features, aspects and advantages of the subjects of the present disclosure will become apparent by way of the specific embodiments, drawings and claims.

### BRIEF DESCRIPTION OF THE DRAWINGS

In order to more clearly describe the technical solutions in the specific embodiments of the present disclosure and in the prior arts, the drawings required for descriptions of the specific embodiments or the prior arts will be briefly introduced below. Apparently, the drawings described herein are merely some embodiments of the present disclosure. Those skilled in the arts can obtain other drawings based on these drawings without making creative work.
FIG. 1 is a diagram illustrating steps of a method for implementing a vehicle bus virtual channel according to one or more embodiments of the present disclosure.
FIG. 2 is a principle block diagram illustrating a system for implementing a vehicle bus virtual channel according to one or more embodiments of the present disclosure.
FIG. 3 is a principle block diagram illustrating a system for implementing a vehicle bus virtual channel according to one or more embodiments of the present disclosure.
FIG. 4 is a principle block diagram illustrating an electronic device according to some embodiments of the present disclosure.

### DETAILED DESCRIPTION OF THE EMBODIMENTS

In order to make the object, technical solutions and advantages of the embodiments of the present disclosure clearer, the technical solutions of the present disclosure will be fully and clearly described in combination with drawings. Apparently, the embodiments described herein are only some embodiments rather than all embodiments. All other embodiments obtained by those skilled in the art based on these drawings without making creative work shall fall within the scope of protection of the present disclosure.

In order to simulate the communication processes of various vehicle buses on a computer, and provide virtual hardware support for bus tools, multiple bus tool processes of different manufacturers can be connected mutually via virtual hardware to perform real-time communication. In the relevant vehicular software development technologies, data transmission of the virtual buses is usually controlled at the bottom layer of the system by writing a driver program. In this way, multiple bus tool processes can be connected mutually via the virtual hardware to realize real-time communication. But, the following problems may occur to the method of controlling data transmission of the virtual buses by writing a driver program:

The driver program can be used only after the computer on which the driver program is installed is rebooted and thus cannot be used upon opening.

The driver program is closely bound to the software system. If a driver program is created on the Windows System to realize a virtual channel, the driver program cannot run in the Linux system due to poor portability.

The driver program has poor update capability, namely, the driver program cannot be automatically updated to support new FlexRay bus and Ethernet virtual channel even if supporting the virtual channels of the CAN bus and LIN bus.

Therefore, at least one embodiment of the present disclosure provides: a method for implementing a vehicle bus virtual channel, which includes: creating a server process as a provider of the virtual channel and monitoring a fixed port of a local computer based on user datagram protocol (UDP) after being enabled; creating at least one client process, taking each client process as a user of the virtual channel, and monitoring a random port of the local computer based on UDP after being enabled; wherein, the client process sends a registration request data packet to the server process; upon successful reception, the server process, returns a reception success signal back to the client process; after receiving the reception success signal, the client process sends a heartbeat packet to the server process at a specific time interval and waits for a response of the server process for the heartbeat packet; wherein the client process sends a vehicle bus message to the server process; if the vehicle bus message is sent successfully, the server process sets a timestamp of the vehicle bus message and then sends the vehicle bus message back to the client process while modifying a direction attribute of the vehicle bus message to "sent"; at the same time, sends the vehicle bus message to other client processes and modifying the direction attribute of the vehicle bus message to "received".

The provider of the virtual channel achieves packet routing and data reception and transmission between multiple users of the virtual channel so as to simulate a running mechanism of the packet routing and data reception and transmission in a real network, thus achieving real-time communication as well as real-time simulation.

Various non-limiting implementations of the embodiments of the present disclosure will be detailed below in combination with drawings.

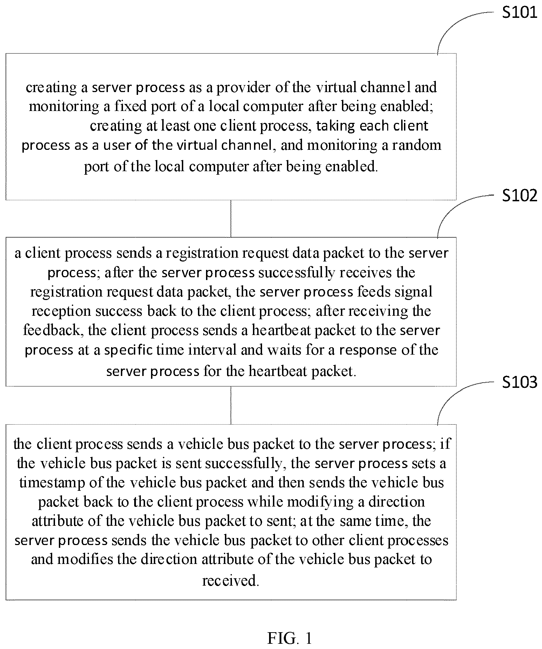

As shown in FIG. 1, one or more embodiments provide a method for implementing a vehicle bus virtual channel, which includes the following steps.

At step S101, a server process is created as a provider of the virtual channel and a fixed port of a local computer is monitored based on UDP after being enabled; at least one client process is created, each of the at least one client process is taken as a user of the virtual channel, and a random port of the local computer is monitored based on UDP after being enabled;
At step S 102, a client process sends a registration request data packet to the server process; after the server process successfully receives the registration request data packet, the server process feeds reception success signal back to the client process; after receiving the feedback, the client process sends a heartbeat packet to the server process at a specific time interval and waits for a reply of the server process for the heartbeat packet.

At step S103, the client process sends a vehicle bus message to the server process; if the vehicle bus message is sent successfully, the server process sets a timestamp of the vehicle bus message and then sends the vehicle bus message back to the client process while modifying a direction attribute of the vehicle bus message to "sent"; at the same time, the server process sends the vehicle bus message to other client processes and modifies the direction attribute of the vehicle bus message to "received".

Specifically, the server process can provide one or more virtual channels; each client process can use one or more virtual channels.

In some embodiments, after the server process is enabled, the fixed port of the local computer is monitored based on a User Datagram Protocol (UDP) or a Transmission Control Protocol (TCP); and after each client process is enabled, the random port of the local computer is monitored respectively based on UDP or TCP.

With the implementation of the virtual channel of the vehicular CAN network communication as an example, the method for implementing the vehicle bus virtual channel according to the embodiments of the present disclosure will be detailed below.
For the step S101 in some embodiments:
Firstly, an independent command line process "VirtualCANServer.exe" is created as a server process of the CAN bus virtual channel, i.e. a provider of the virtual channel. After being enabled, the server process enables a UDP server carried on itself to monitor a fixed port, for example, 11898.
Secondly, based on use requirements, multiple independent processes are created as client processes of the CAN bus virtual channel, for example, a power assembly client process, a tool client process, a vehicle model client process and a vehicle chassis client process and the like. For ease of descriptions, descriptions on the vehicle chassis client process are emphasized in this case. Specifically, an independent process "Chassis1.exe" is created to simulate the behaviors of the Electronic Control Unit (ECU) on the vehicle chassis, and the process is taken as the client process of the CAN bus virtual channel, i.e. the user of the virtual channel. After being enabled, the client process enables a UDP server carried on itself to monitor a random port, for example, 50000.

For the step S 102 in some embodiments:
After being enabled successfully, the client process sends a UDP data packet for registration request to a monitoring port 11898 of the server process.

After receiving the UDP data packet for registration request, the server process creates one client process instance including a UDP monitoring port 50000 of the client process and a heartbeat-maintaining counter AliveCounter (an initial value is a maximum tolerance value, for example 10) of the client process, and adds the client process instance to a data distribution queue grouped based on channel. After addition, the server process sends a UDP data packet for registration confirmation to the monitoring port of the client process.

The client process receives the UDP data packet for registration confirmation from its own monitoring port 50000 and then sets a valid flag of the server process and finally sends a heartbeat packet for maintaining communication to the monitoring port 11898 of the server process at a specific time interval (e.g. at a sending frequency of one UPD data packet per second).

After receiving the heartbeat packet from the client process, the server process resets the heartbeat-maintaining counter AliveCounter of the corresponding client process to a tolerance value, for example, 10. Next, the server process sends a UDP data packet for heartbeat confirmation to the monitoring port 50000 of the client process, and thus completes a reply for the heartbeat packet.

If the client process receives the UDP data packet for heartbeat confirmation from its own monitoring port 50000, the client process resets its own server feedback counter ServerCounter to a tolerance value. If the client process does not receive the UDP data packet for heartbeat confirmation from its own monitoring port 50000, the server feedback counter ServerCounter is reduced by 1. When the server feedback counter ServerCounter is reduced to 0, the client process reports an error indicating the server process is offline and the virtual channel is disconnected.

For the step S103 in some embodiments:
When the client process is to send a CAN bus packet, the client process sends a data packet for data reception and transmission, which carries the CAN bus packet, to the server process. The data packet for data reception and transmission is encoded by compression and encryption and includes attributes such as channel index, Id, data length and data bytes and the like of the CAN bus packet. When the server process successfully receives the CAN bus packet, the server process firstly decodes the CAN bus packet and analyzes the channel index carried in the CAN bus packet to determine a virtual channel to which the CAN bus packet is to be routed. Next, the server process modifies a timestamp carried in the CAN bus packet to a timestamp actively obtained by the server process after receiving the CAN bus packet.

Next, a data distribution stage is started. The server process firstly modifies the direction of the CAN bus packet to "sent" and sends it to the vehicle chassis client process. After receiving the CAN bus packet from its own monitoring port 50000, the client process firstly decodes it to obtain a CAN bus packet with a latest timestamp and hence, the client process can know when the CAN bus packet sent by the client process is replied to by another client process.

Next, the server process modifies the direction of the CAN bus packet to reception and distributes the CAN bus packet to all corresponding client processes through the data distribution queue of the corresponding virtual channel. After the client process receives the CAN bus packet from its own monitoring port 50000, the client process firstly decodes it to obtain a CAN bus packet with a latest timestamp and thus can know when the ECU simulated by the client process receives the CAN bus packet from the ECUs simulated by other client processes.

In some embodiments, a method of creating the server process includes:
after a program of the server process is enabled, it attempts to create a mutex named after the name of the program; if the mutex is already present, the creation of the mutex fails and the process program exits, and otherwise, the creation of the mutex is successful and the process program runs, and the mutex is released when the process program is ended; and
after the program is enabled, it monitors a fixed port of the local computer; if monitoring fails, the process program exits and the mutex is released.

With the program "VirtualCANServer.exe" of the server process as the provider of the independent CAN bus virtual channel of the Windows end as an example, the method of creating the server process is detailed below.

After the program "VirtualCANServer.exe" of the server process is enabled, a mutex API function "CreateMutex" provided by the software system is called and the mutex is created with the name "VirtualCANServer" of the program of the server process as the mutex name. Next, an error code is obtained by GetLastError function. If the error code is equal to the system constant "ERROR_ALREADY_EXISTS", it means the mutex is present and creation is failed and the program of the server process is exited. Otherwise, the program of the server process enters normal working state.

After the program of the server process enters normal working state, the UDP monitoring port 11898 is firstly enabled. If the enabling is failed, it indicates the monitoring port is occupied and the server process reports an error and exits.

When the server process is exited under normal or abnormal circumstance, if the mutex is already created, the API function "ReleaseMutex" is called to release the created mutex.

In some embodiments, a method of creating at least one client process includes:
after the program of each client process is enabled, it attempts to monitor any random port of the local computer; if monitoring fails, it attempts to monitor another random port of the local computer until monitoring becomes successful.

With the program "Chassis1.exe" of the client process as the user of the CAN bus virtual channel of the Windows end as an example, the method of creating at least one client process is detailed below.

After the program "Chassis1.exe" of the client process is enabled, the client process enables its own UDP server to monitor one random port, for example, 50000. If the monitoring fails, the client process generates another random port, for example, 32768, and continues monitoring the port until monitoring is successful. The successfully-monitored port is 12345, the program of the client process enters normal working state and keeps monitoring the port.

In some embodiments, the registration request data packet includes: a random port number monitored by the client process; and the heartbeat packet includes a random port number monitored by the client process.

In some embodiments, after the client process is successfully enabled, the client process sends a UDP data packet for registration request to the port 11898 of the server process, where the UDP data packet for registration request carries the UDP monitoring port, for example, 50000, of the client process.

After the client process is successfully registered in the server process, the client process sends a UDP data packet for maintaining heartbeat to the port 11898 of the server process, where the UDP data packet for maintaining heartbeat carries the UDP monitoring port, for example, 50000, of the client process.

In some embodiments, the setting of the timestamp of the vehicle bus message by the server process characterized in that:
after being enabled the server process reads a current value of a system performance counter and stores the value into a variable T1;
after receiving the vehicle bus message from the client process, the server process, re-reads the current value of the system performance counter and stores the value into a variable T2;
then, the timestamp is T = (T2 - T1) / F, wherein F is a frequency of the system performance counter.

When the server process processes the bus packet, the timestamp is to be set. In the Windows platform, when the server process is enabled, the frequency of the system performance counter can be obtained by calling QueryPerformanceFrequency system API function and stored into the variable F. Then, by calling QueryPerformanceCounter API function, the current value of the system performance counter is obtained and stored into the variable T1.

When receiving a packet from the client process, the server process may call QueryPerformanceCounter system API function to obtain the current value of the system performance counter and store the value into the variable T2. In this way, the timestamp of this packet can be obtained as T = (T2 - T1) / F. For the CAN bus, once the packet sent by the client process is successfully replied to on the bus, the timestamp of the packet is already determined, and all ECUs receiving the packet can obtain the same timestamp.

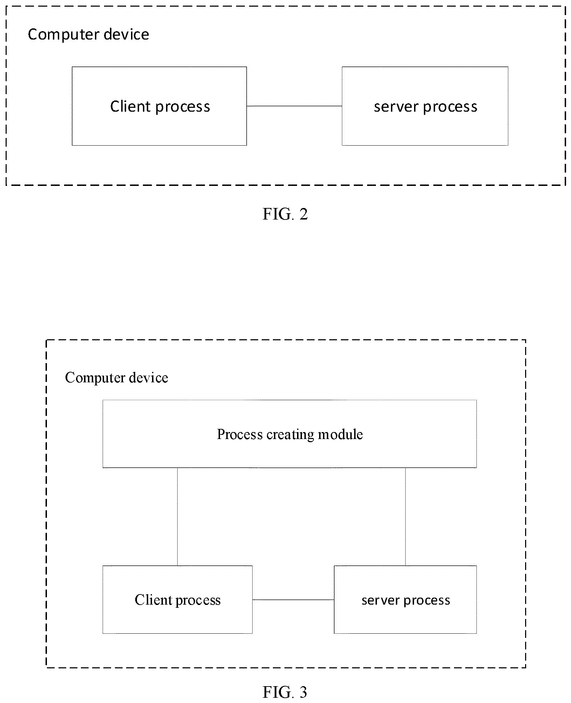

As shown in FIG. 2, one or more embodiments further provide a system for implementing a vehicle bus virtual channel, including: at least one computer device, configured to execute the client processes and a server process;
the client processes are configured, as a user of the virtual channel, to send a registration request data packet to the server process, send a heartbeat packet to the server process at a specific time interval, and send a vehicle bus message to the server process;
the server process is configured as a provider of the virtual channel to: receive the registration request data packet, the heartbeat packet and the vehicle bus message from a client process, set a timestamp of the vehicle bus message and send the vehicle bus message back to the client process while modifying a direction attribute of the vehicle bus message to "sent"; at the same time, send the vehicle bus message to other client processes and modify the direction attribute of the vehicle bus message to "received".

In some embodiments, the computer device is further configured to create at least one client process, characterized in that: after the program of each client process is enabled, it attempts to monitor any random port of the local computer; if the monitoring fails, it attempts to monitor another random port of the local computer until monitoring becomes successful.

In some embodiments, the registration request data packet comprises: a random port number monitored by the client process; and the heartbeat packet comprises a random port number monitored by the client process.

In some embodiments, the setting of the timestamp of the vehicle bus message by the server process is characterized in that: after being enabled, the server process reads a current value of a system performance counter and stores the value into a variable T1; after receiving the vehicle bus message from the client process, the server process re-reads the current value of the system performance counter and stores the value into a variable T2; and then, the timestamp is T = (T2 - T1) / F, wherein F is a frequency of the system performance counter.

In some embodiments, after the server process is enabled, a fixed port of a local computer is monitored based on UDP or TCP; after each client process is enabled, a random port of the local computer is monitored respectively based on UDP or TCP.

As shown in FIG. 3, one or more embodiments provide a system for implementing a vehicle bus virtual channel, including at least one computer device, which is configured to execute a process creating module, client processes and a server process; where,
the process creating module is configured to create a server process and at least one client process;
the client processes are configured to, as a user of the virtual channel, send a registration request data packet to the server process, send a heartbeat packet to the server process at a specific time interval, and send a vehicle bus message to the server process;
the server process is configured to: as a provider of the virtual channel, receive the registration request data packet, the heartbeat packet and the vehicle bus message from a client process, set a timestamp of the vehicle bus message and send the vehicle bus message back to the client process while modifying a direction attribute of the vehicle bus message to "sent"; at the same time, send the vehicle bus message to other client processes and modify the direction attribute of the vehicle bus message to "received".

The specific functions of the process creating module, the client processes and the server process are implemented in the computer device, which can be referred to the contents of the above method for implementing the vehicle bus virtual channel. Thus, no redundant descriptions are made herein.

The processor executes the program to perform the steps in the embodiments of the method for implementing the vehicle bus virtual channel shown in FIG. 1, for example, the steps S101 to S103 shown in FIG. 1. Alternatively, the processor executes the computer program to execute the functions of the modules or units in various apparatus embodiments.

In some embodiments, the processor is specifically configured to perform the steps of:
creating a server process as a provider of the virtual channel and monitoring a fixed port of a local computer after being enabled; creating at least one client process, taking each client process as a user of the virtual channel, and monitoring a random port of the local computer after being enabled.
wherein, the client process sends a registration request data packet to the server process; upon successful reception, the server process, returns a reception success signal back to the client process; after receiving the reception success signal, the client process sends a heartbeat packet to the server process at a specific time interval and waits for a response of the server process for the heartbeat packet;
wherein the client process sends a vehicle bus message to the server process; if the vehicle bus message is sent successfully, the server process sets a timestamp of the vehicle bus message and then sends the vehicle bus message back to the client process while modifying a direction attribute of the vehicle bus message to "sent"; at the same time, sends the vehicle bus message to other client processes and modifying the direction attribute of the vehicle bus message to "received".

Optionally, as one possible implementation, the processor is further configured to perform the steps of:
a method of creating the server process, characterized in that:
after a program of the server process is enabled, it attempts to create a mutex named after the name of the program; if the mutex is already present, the creation of the mutex fails and the process program exits, and otherwise, the creation of the mutex is successful and the process program runs, and the mutex is released when the process program is ended; and
after the program is enabled, it monitors a fixed port of the local computer; if the monitoring fails, the process program exits and the mutex is released.

Optionally, as one possible implementation, the processor is further configured to perform the steps of:
a method of creating at least one client process, comprising:
after the program of each client process is enabled, it attempts to monitor any random port of the local computer; if the monitoring fails, it attempts to monitor another random port of the local computer until monitoring becomes successful.

Optionally, as one possible implementation, the processor is further configured to perform the steps of:
the registration request data packet comprising a random port number monitored by the client process; and
the heartbeat packet comprising a random port number monitored by the client process.

Optionally, as one possible implementation, the processor is further configured to perform the steps of:
setting, by the server process, the timestamp of the vehicle bus message, comprising:
after being enabled, reading, by the server process, a current value of a system performance counter and storing the value into a variable T1;
after receiving the vehicle bus message from the client process, re-reading, by the server process, the current value of the system performance counter and storing the value into a variable T2;
obtaining the timestamp T = (T2 - T1) / F, wherein F is a frequency of the system performance counter.

One or more embodiments of the present disclosure further provide a computer readable storage medium, storing at least one program of performing the method for implementing the vehicle bus virtual channel, where the program is executed by a processor to perform the specific steps of the method for implementing the vehicle bus virtual channel, which can be referred to the specific descriptions of the method for implementing the vehicle bus virtual channel and will not be repeated herein.

One or more embodiments of the present disclosure further provide a computer program product, including at least one computer program or at least one instruction, where the computer program or instruction is executed on a computer to cause the computer to perform any one of the above methods for implementing the vehicle bus virtual channel.

An electronic device in the embodiments of the present disclosure will be described below from the angle of hardware processing.

The specific implementations of some embodiments do not constitute any limitation to the specific implementation of the electronic device.

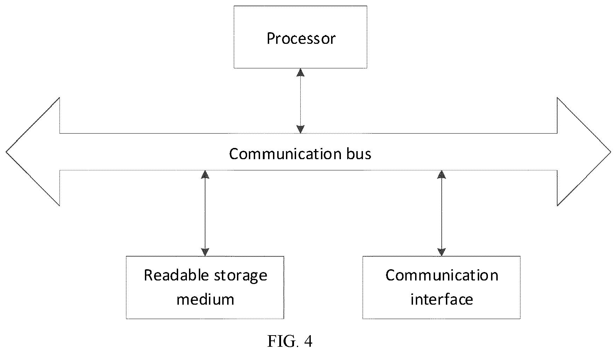

As shown in FIG. 4, one or more embodiments of the present disclosure further provide an electronic device, comprising: at least one memory, storing at least one instruction; at least one processor, configured to perform the instruction to cause the processor to perform the operations of: creating a server process as a provider of the virtual channel and monitoring a fixed port of a local computer after being enabled; creating at least one client process, taking client process as a user of the virtual channel, and respectively monitoring a random port of the local computer after being enabled; sending, by the client process, a registration request data packet to the server process; successfully receiving, by the server process, the registration request data packet and then feeding reception success signal back to the client process; after receiving the feedback, sending, by the client process, a heartbeat packet to the server process at a specific time interval and waiting for a reply of the server process for the heartbeat packet; sending, by the client process, a vehicle bus message to the server process; if the vehicle bus message is sent successfully, setting, by the server process, a timestamp of the vehicle bus message and then sending the vehicle bus message back to the client process while modifying a direction attribute of the vehicle bus message to "sent"; at the same time, sending the vehicle bus message to other client processes and modifying the direction attribute of the vehicle bus message to "received".

In some embodiments, a method of creating the server process characterized in that: after a program of the server process is enabled, it attempts to create a mutex named after the name of the program; if the mutex is already present, the creation of the mutex fails and the process program exits, and otherwise, the creation of the mutex is successful and the process program runs, and the mutex is released when the process program is ended; and after the program is enabled, it monitors the a fixed port of the local computer; if the monitoring fails, the process program exits and the mutex is released.

In some embodiments, a method of creating at least one client process comprises: after a program of the at least client process is enabled, monitoring any random port of the local computer; if monitoring fails, it attempts to monitor another random port of the local computer until monitoring is successful.

In some embodiments, the registration request data packet comprises: a random port number monitored by the client process; and the heartbeat packet comprises a random port number monitored by the client process.

In some embodiments, the setting of the timestamp of the vehicle bus message by the server process characterized in that: after being enabled, the server process reads a current value of a system performance counter and stores the value into a variable T1; after receiving the vehicle bus message from the client process, by the server process re-reads the current value of the system performance counter and stores the value into a variable T2; then, the timestamp is T = (T2 - T1) / F, wherein F is a frequency of the system performance counter.

In some embodiments, after the server process is enabled, the fixed port of the local computer is monitored based on a User Datagram Protocol (UDP) or a Transmission Control Protocol (TCP); and after each client process is enabled, the random port of the local computer is monitored respectively based on UDP or TCP.

In some embodiments, the communication interface may be RS232, RS485, USB interface or TYPE interface or the like, which may be connected with an external bus adapter. The communication interface may also include wired or wireless network interface. The network interface may optionally include wired interface and/or wireless interface (such as WI-FI interface, Bluetooth interface and the like), which is usually used to establish communication connection between the computer device and other electronic devices.

The storage module, the readable storage medium or the computer readable storage medium includes at least one type of memories. The memory includes flash memory, harddisk drive, multimedia card, card type memory (e.g. SD memory or the like), magnetic memory, magnetic disk or compact disk or the like. In some embodiments, the memory may be an internal storage unit in the computer device, for example, a harddisk drive of the computer device. In some other embodiments, the memory may also be an external storage device of the computer device, for example, a plug type hard disk drive, a smart media card (SMC), a secure digital (SD) card, a flash card or the like on the computer device. Furthermore, the memory may include both the internal storage unit in the computer device and the external storage device. The memory may be used to not only store an application software installed on the computer device and various types of data, for example, the codes of the computer program and the like but also temporarily store data already output or to be output.

In some embodiments, the processor may be a central processing unit (CPU), a controller, a microcontroller, a microprocessor or another data processing chip, which is used to run the program codes in the memory or process the data, for example, execute the computer program or the like.

In some embodiments, the communication bus may also be an input/output bus, which may be a Peripheral Component Interconnect (PCI) bus, or an Enhanced Industry Standard Architecture (EISA) bus or the like. The bus may include an address bus, a data bus and a control bus and the like.

Optionally, the computer device may also include a user interface, which may include a display, and an input unit, for example, a keyboard. Optionally, the user interface may also include a standard wired interface and wireless interface. Optionally, in some embodiments, the display or display module may be an LED display, a liquid crystal display, a touch liquid crystal display and an Organic Light-Emitting Diode (OLED) touch display and the like. The display or display module may also be appropriately referred to as display screen or display unit for displaying information processed in the computer device as well as a visual user interface.

In the several embodiments provided by the present disclosure, it should be understood that the disclosed device and method can be implemented another way. The above device embodiments are merely illustrative, for example, the flowcharts or block diagrams in the drawings show possible system architectures, functions and operations of the device, method, and computer program product in the several embodiments provided by the present disclosure. Thus, each block in the flowcharts or block diagrams may represent one module, one program fragment or one part of codes. The module, the program fragment or the part of codes includes one or more executable instruction for implementing the specified logic functions. It should be noted that in some alternative embodiments, the functions indicated in the blocks may also be performed in a sequence different from that indicated in the drawings. For example, two continuous blocks can be actually performed basically in parallel, and sometimes may be performed in a reverse sequence, which is dependent on the functions involved. It is further noted that each block in the block diagrams and/or flowcharts and the combinations of the blocks in the block diagrams and/or flowcharts may be implemented by a dedicated hardware-based system for executing specified functions or actions, or by combination of dedicated hardware and computer instructions.

Furthermore, the functional modules in the embodiments of the present disclosure can be integrated into one independent part, or exist as separate modules or two or more of the modules are integrated into one independent part.

The functions, when implemented by software function modules and sold or used as independent products, can be stored in one computer readable storage medium. Based on such understanding, the essence of technical solutions of the present disclosure, or a part contributing to the prior arts or a part of the technical solutions can be embodied in the form of software product. The computer software product is stored in one storage medium which includes several instructions to enable one computer device (for example, a personal computer, a server, or a network device or the like) to perform all or part of the steps of the method of each of the embodiments of the present disclosure.

Enlightened by the ideal embodiments of the present disclosure, relevant workers can, based on the contents of the specification, make various changes and modifications within the scope of protection of the technical idea of the present disclosure. The technical scope of the present disclosure is not limited to the contents of the specification but to the technical scope claimed by the claims.

## Claims

1. A method for implementing a vehicle bus virtual channel, comprising:
creating a server process as a provider of the virtual channel and monitoring a fixed port of a local computer after being enabled; creating at least one client process, taking each client process as a user of the virtual channel, and monitoring a random port of the local computer after being enabled;
wherein, the client process sends a registration request data packet to the server process; upon successful reception, the server process returns a reception success signal back to the client process; after receiving the reception success signal, the client process sends a heartbeat packet to the server process at a specific time interval and waits for a response of the server process for the heartbeat packet; and
wherein the client process sends a vehicle bus message to the server process; if the vehicle bus message is sent successfully, the server process sets a timestamp of the vehicle bus message and then sends the vehicle bus message back to the client process while modifying a direction attribute of the vehicle bus message to "sent"; at the same time, sends the vehicle bus message to other client processes and modifying the direction attribute of the vehicle bus message to "received".

2. The method for implementing the vehicle bus virtual channel according to claim 1, wherein,
the creating of the server process **characterized in that**:
after a program of the server process is enabled, it attempts to create a mutex named after the name of the program; if the mutex is already present, the creation of the mutex fails and the process program exits, and otherwise, the creation of the mutex is successful and the process program runs, and the mutex is released when the process program is ended; and
after the program is enabled, it monitors a fixed port of the local computer; if monitoring fails, the process program exits and the mutex is released.

3. The method for implementing the vehicle bus virtual channel according to claim 1, wherein,
the method of creating of the at least one client process comprising:
after a program of each client process is enabled, respectively monitoring any random port of the local computer; if monitoring fails, it attempts to monitor another random port of the local computer until monitoring is successful.

4. The method for implementing the vehicle bus virtual channel according to claim 3, wherein,
the registration request data packet comprises: a random port number monitored by the client process; and
the heartbeat packet comprises a random port number monitored by the client process_{∘}

5. The method for implementing the vehicle bus virtual channel according to claim 1, wherein,
the setting of the timestamp of the vehicle bus message by the server process is **characterized in that**:
after being enabled, the server process reads a current value of a system performance counter and stores the value into a variable T1;
after receiving the vehicle bus message from the client process, the server process re-reads the current value of the system performance counter and stores the value into a variable T2; and
then, the timestamp is T = (T2 - T1) / F, wherein F is a frequency of the system performance counter.

6. The method for implementing the vehicle bus virtual channel according to claim 1, wherein,
after the server process is enabled, monitoring the fixed port of the local computer based on a User Datagram Protocol (UDP) or a Transmission Control Protocol (TCP); and
after each client process is enabled, respectively monitoring the random port of the local computer based on UDP or TCP.

7. A computer readable storage medium, storing at least one computer readable instruction, wherein, when executed by at least one processor, causes the execution of the program of any one of the methods of claims 1-6.

8. An electronic device, comprising:
at least one memory, storing at least one instruction;
at least one processor, configured to perform the instruction to cause the processor to execute the program of performing any one of the methods of claims 1-6.

9. A system for implementing a vehicle bus virtual channel, comprising: at least one computer device, configured to execute client processes and a server process; wherein,
the client processes are configured to send a registration request data packet to the server process, send a heartbeat packet to the server process at a specific time interval, and send a vehicle bus message to the server process;
the server process is configured to: receive the registration request data packet, the heartbeat packet and the vehicle bus message from the client process, set a timestamp of the vehicle bus message and send the vehicle bus message back to the client process while modifying a direction attribute of the vehicle bus message to "sent"; at the same time, send the vehicle bus message to other client processes and modify the direction attribute of the vehicle bus message to "received".

10. The system for implementing the vehicle bus virtual channel according to claim 9, wherein,
the computer device is further configured to create the server process, **characterized in that**:
after a program of the server process is enabled, it attempts to create a mutex named after the name of the program; if the mutex is already present, the creation of the mutex fails and the process program exits, and otherwise, the creation of the mutex is successful and the process program runs, and the mutex is released when the process program is ended; and
after the program is enabled, it monitors a fixed port of the local computer; if the monitoring fails, the process program exits and the mutex is released.

11. The system for implementing the vehicle bus virtual channel according to claim 9, wherein,
the computer device is further configured to create at least one client process, **characterized in that**:
after the program of each client process is enabled, it attempts to monitor any random port of the local computer; if monitoring fails, it attempts to monitor another random port of the local computer until monitoring becomes successful.

12. The system for implementing the vehicle bus virtual channel according to claim 11, wherein,
the registration request data packet comprises: a random port number monitored by the client process; and
the heartbeat packet comprises a random port number monitored by the client process.

13. The system for implementing the vehicle bus virtual channel according to claim 9, wherein,
the setting of the timestamp of the vehicle bus message by the server process is **characterized in that**:
after being enabled, the server process reads a current value of a system performance counter and stores the value into a variable T1;
after receiving the vehicle bus message from the client process, the server process re-reads the current value of the system performance counter and stores the value into a variable T2; and
then, the timestamp is T = (T2 - T1) / F, wherein F is a frequency of the system performance counter.

14. The system for implementing the vehicle bus virtual channel according to claim 9, wherein,
after the server process is enabled, it monitors a fixed port of a local computer based on UDP or TCP; and
after each client process is enabled, it monitors a random port of the local computer based on UDP or TCP.

15. A computer program product, comprising:
at least one computer program or instruction, where the computer program or instruction is executed on a computer to cause the computer to perform the methods of any of claims 1-6.
